# EUROPÄISCHE PATENTSCHRIFT

(11) **EP 2 715 301 B1**
(45) Veröffentlichungstag und Bekanntmachung des Hinweises auf die Patenterteilung: **07.11.2018**
(21) Anmeldenummer: 12720490.7
(22) Anmeldetag: 10.05.2012
(51) Int. Cl.: B23K 1/00, G01L 7/02, G01L 9/00, G01L 19/00, B23K 11/00, G01L 19/06

(54) **DRUCKSENSOR UND VERFAHREN ZUR HERSTELLUNG EINES DRUCKSENSORS**
PRESSURE SENSOR AND METHOD FOR PRODUCING A PRESSURE SENSOR
CAPTEUR DE PRESSION ET PROCÉDÉ DE FABRICATION D'UN CAPTEUR DE PRESSION

(30) Priorität: 30.05.2011 DE 102011102837
(43) Veröffentlichungstag der Anmeldung: 09.04.2014
(73) Patentinhaber: Epcos AG, 81671 München (DE)
(72) Erfinder: THIELE, Peter, 12623 Berlin (DE); WOHLGEMUTH, Christian, 12249 Berlin (DE)
(74) Vertreter: Epping - Hermann - Fischer
(86) Internationale Anmeldenummer: PCT/EP2012/058667
(87) Internationale Veröffentlichungsnummer: WO 2012/163650

(56) Entgegenhaltungen:
- WO-A1-2004/053449
- DE-U1- 29 502 825
- US-A- 3 559 488

## Beschreibung

Es wird ein Drucksensor mit einem Gehäuse, das mit einem fluiden Medium gefüllt ist, angegeben. Weiterhin wird ein Verfahren zur Herstellung eines Drucksensors angegeben.

Drucksensoren sind aus der Druckschrift US 3,559,488 bekannt.

Bekannte, mit Übertragungsmedien gefüllte Drucksensoren benötigen einen Verschluss für eine Einfüllöffnung, über die das Übertragungsmedium eingefüllt wird. Der Verschluss muss für den Betrieb eine langzeitstabile hermetische Dichtigkeit aufweisen und erfolgt üblicherweise durch Einpressen von Metallkugeln oder Metallstiften in Passungen. Beispielsweise offenbart die Druckschrift DE 295 02 825 U1 einen Drucksensor, bei dem eine Ölabfüllöffnung mit einem Verschlusszapfen geschlossen und abgedichtet wird. Die Druckschrift WO 2004/053449 A1 offenbart einen Drucksensor, bei dem ein Öl-Kanal mit einer darin angeordneten Kugel verschlossen wird.

Es ist eine zu lösende Aufgabe zumindest einiger Ausführungsformen, einen Drucksensor anzugeben. Eine weitere Aufgabe zumindest einiger Ausführungsformen ist es, ein Verfahren zur Herstellung eines Drucksensors anzugeben.

Diese Aufgaben werden durch die Gegenstände der unabhängigen Patentansprüche gelöst. Vorteilhafte Ausführungsformen und Weiterbildungen der Gegenstände gehen weiterhin aus der nachfolgenden Beschreibung und den Zeichnungen hervor.

Ein Drucksensor weist ein Gehäuse auf. Des Weiteren weist der Drucksensor eine Membran auf, die vorzugsweise an dem Gehäuse befestigt ist. Die Membran kann beispielsweise durch Schweißen oder Löten mit dem Gehäuse verbunden sein. Vorzugsweise weist die Membran ein Metall auf oder besteht aus Metall. Die Membran kann beispielsweise aus Edelstahl sein. Alternativ kann die Membran auch Kunststoff oder Glas aufweisen. In diesem Fall kann die Membran beispielsweise auch mit dem Gehäuse verklebt sein.

Gemäß der Erfindung bildet die Membran mit dem Gehäuse eine nach außen abgeschlossene Kammer beziehungsweise einen nach außen abgeschlossenen Hohlraum. Die Kammer ist mit einem fluiden Medium gefüllt. Bei dem fluiden Medium handelt es sich vorzugsweise um eine inerte, elektrisch nichtleitende Flüssigkeit. Das fluide Medium kann beispielsweise ein Öl, zum Beispiel Silikonöl oder Mandelöl, sein. Hier und im Folgenden kann das fluide Medium auch als Übertragungsmedium, als Füllmedium oder als Transfermedium beziehungsweise Transferflüssigkeit bezeichnet werden.
Gemäß einer weiteren Ausführungsform ist in der Kammer ein Sensorelement angeordnet. Das Sensorelement dient der Aufnahme und Umwandlung einer mechanischen Messgröße in ein elektrisches Signal. Beispielsweise weist das Sensorelement einen piezoresistiven Silizium-Chip mit einer Silizium-Membran auf, auf der Widerstandselemente eindiffundiert beziehungsweise eindotiert sind. Der Silizium-Chip kann zum Beispiel auf einem Glas- oder Silizium-Körper montiert sein. Über eine druckabhängige Verformung der Silizium-Membran und darauf aufgebrachten verformungsabhängigen Widerstandselemente kommt es zur Ausbildung einer elektrischen Spannung, über die eine Druckbestimmung erfolgen kann.
Vorzugsweise ist das Sensorelement in der Kammer in einer Vertiefung des Gehäuses angeordnet. Das Sensorelement kann beispielsweise mittels Bonddrähten kontaktiert werden, die mit auf dem Gehäuse aufgebrachten Leiterbahnen elektrisch leitend verbunden sind.

Der hier beschriebene Drucksensor kann sich insbesondere zur Messung des Absolutdrucks oder des Relativdrucks eines Mediums beziehungsweise zur Messung des Differenzdrucks zwischen zwei Medien eignen.

Das Gehäuse weist eine Einfüllöffnung auf. Die Einfüllöffnung dient der Befüllung der Kammer mit dem fluiden Medium. Beispielsweise verbindet ein Kanal die Einfüllöffnung mit der Kammer, so dass die Kammer durch die Einfüllöffnung über den Kanal mit dem fluiden Medium gefüllt werden kann. Das Gehäuse kann eine oder mehrere Einfüllöffnungen sowie einen oder mehrere Kanäle zur Befüllung der Kammer mit dem fluiden Medium aufweisen. Die Kanäle können dabei beliebig durch das Gehäuse verlegt sein.

Gemäß einer Ausführungsform ist die Einfüllöffnung mittels eines Lötverschlusses verschlossen. Der Lötverschluss kann beispielsweise ein metallisches Lot aufweisen. Mittels des Lötverschlusses kann die Einfüllöffnung beziehungsweise das Gehäuse des Drucksensors hermetisch dicht verschlossen werden.

Gemäß einer weiteren Ausführungsform ist die Einfüllöffnung mittels eines Schweißverschlusses verschlossen. Der Schweißverschluss kann zum Beispiel mittels Widerstandsschweißen, beispielsweise Widerstandsbuckelschweißen beziehungsweise Ringbuckelschweißen, erzeugt werden. Bei Anwendung eines Schweißverfahrens zum Verschließen der Einfüllöffnung wird ein ähnliches Ergebnis wie beim Verschließen des Verschlusses mittels Löten erzielt.

Der Verschluss der Einfüllöffnung mittels eines Lötbeziehungsweise Schweißverschlusses weist insbesondere eine langzeitstabile hermetische Dichtigkeit auf. Darüber hinaus wird, im Gegensatz zu Verschlüssen mit Presspassungen, beim Verschließen der Einfüllöffnung mittels Löten oder Schweißen das Volumen des fluiden Mediums im Gehäuse des Drucksensors nicht verändert. Es wird also ein hermetisch dichter Verschluss eines mediumgefüllten Drucksensors ermöglicht ohne zusätzliches Einpressen von Mediumvolumen, welches zu einer störenden Veränderung der Druckverhältnisse im Gehäuse des Drucksensors führen würde.

Weiterhin ist bei dem Löt- beziehungsweise Schweißverschluss der Einfüllöffnung eines hier beschriebenen Drucksensors ein Einhalten von engen Toleranzen bei Passungen, wie bei zum Beispiel bei Presspassungen oder anderen Arten von Verschlüssen auf Basis eines Kraftschlusses, nicht notwendig. Dadurch kann bei der Herstellung eines hier beschriebenen Drucksensors vorteilhafterweise eine Kosteneinsparung erzielt werden, da eine aufwändige Produktion passgenauer Metallkugeln, Metallstifte etc. entfällt.

Gemäß einer weiteren Ausführungsform weist das Gehäuse Keramik und/oder Glas und/oder Kunststoff und/oder Metall auf oder besteht aus einem dieser Materialien. Gemäß einer weiteren Ausführungsform handelt es sich bei dem Gehäuse um ein FR4-Gehäuse. Insbesondere kann das Gehäuse eines hier beschriebenen Drucksensors im Bereich der Einfüllöffnung eines oder mehrere der genannten Materialen aufweisen. Verschiedene Materialien beziehungsweise Werkstoffe, aus denen Gehäuse mediengefüllter Drucksensoren gefertigt werden, sind aufgrund ihrer Werkstoffeigenschaften für Presspassungen nicht geeignet. Folglich ist die konventionelle Verschlusstechnologie mittels Presspassungen für viele Gehäusewerkstoffe nicht anwendbar. Dies betrifft insbesondere Gehäuse, die Kunststoff, Keramik oder Glas aufweisen.

Bei einem hier beschriebenen Drucksensor erweitert sich die Anzahl an Materialien, die für das Gehäuse eingesetzt werden können, gegenüber bekannten Drucksensoren insbesondere um Werkstoffe, die keine Presspassung zulassen. Durch Verschließen der Einfüllöffnung mittels eines Löt- oder Schweißverschlusses lassen sich somit auch mediengefüllte Drucksensoren mit einem Keramik-, Kunststoff-, Glas- oder FR4-Gehäuse hermetisch dicht verschließen.

Gemäß der Erfindung (Alternative B) weist das Gehäuse in einem Bereich um die Einfüllöffnung herum eine Metallschicht auf. Die Metallschicht kann zum Beispiel durch eine mittels Siebdruckverfahren auf das Gehäuse aufgebrachte Metallpaste, die anschließend bei einer Temperatur von beispielsweise 800 bis 900°C eingebrannt wird, hergestellt werden. Vorzugsweise wird die Einfüllöffnung von der Metallschicht umgeben, ohne von dieser verschlossen zu sein. Je nach Wahl des Gehäusematerials kann die Metallschicht für einen langzeitstabilen hermetischen Schweiß- beziehungsweise Lötverschluss der Einfüllöffnung, beispielsweise bei einem Lötverschluss mit einem Metalllot, von Vorteil sein.

Gemäß der Erfindung (Alternative A) ist die Einfüllöffnung direkt durch ein Lot verschlossen. Dabei verschließt das Lot die Einfüllöffnung des Gehäuses, ohne dass ein zusätzliches Verschlussteil zum Einsatz kommt. Das Lot ist im Bereich der Einfüllöffnung auf der Metallschicht aufgebracht. Gemäß einer weiteren Ausführungsform weisen das Lot und das fluide Medium jeweils eine Oberflächenspannung auf, wobei die Oberflächenspannung des Lots größer ist als die Oberflächenspannung des fluiden Mediums. Vorzugsweise ist die Oberflächenspannung des Lots mindestens 10 Mal größer als die Oberflächenspannung des fluiden Mediums. Gemäß einer besonders bevorzugten Ausführungsform ist die Oberflächenspannung des Lots zwischen einschließlich 10 und einschließlich 50 Mal größer als die Oberflächenspannung des fluiden Mediums. Beispielsweise liegt bei der Verwendung von Lot in Form von bleifreiem Zinnlot und Silikonöl als fluidem Medium die Oberflächenspannung des Zinnlotes beim 25-fachen des Silikonöls.
Dadurch, dass die Oberflächenspannung des Lots vorteilhafterweise größer ist als die Oberflächenspannung des fluiden Mediums, kann erreicht werden, dass überschüssiges fluides Medium durch das Lot von der Einfüllöffnung weggeschoben wird und das erstarrende Lot das Gehäuse verschließt.

Gemäß der Erfindung (Alternative B) weist der Drucksensor ein Verschlussteil auf. Das Verschlussteil ist im Bereich um die Einfüllöffnung mit dem Gehäuse verschweißt oder verlötet. Dabei ist das Verschlussteil mit der Metallschicht verschweißt oder verlötet. Das Verschlussteil ist als Metallplatte ausgeführt. Gemäß einer bevorzugten, insbesondere den
Schweißverschluss betreffenden Ausführungsform weist das Verschlussteil vor dem Verschweißen mit der Metallschicht eine oder mehrere Erhöhungen, so genannte Schweißbuckel, auf. Dabei kann es sich zum Beispiel um eine auf einer Seite des Verschlussteils angeordnete ringförmige Erhöhung handeln. Das Verschlussteil wird zum Verschließen der Einfüllöffnung mit der einen Erhöhung oder den mehreren Erhöhungen auf dem Gehäuse oder auf einer Metallschicht auf dem Gehäuse angeordnet. Beim Schweißvorgang schmilzt die Erhöhung zumindest teilweise auf und kann mit dem Gehäuse beziehungsweise mit der auf dem Gehäuse aufgebrachten Metallschicht eine stabile Verbindung eingehen.

Weiterhin wird ein Verfahren zur Herstellung eines Drucksensors angegeben. Der dadurch herstellbare oder hergestellte Drucksensor kann eines oder mehrere Merkmale der vorgenannten Ausführungsformen aufweisen. Die im Folgenden beschriebenen Ausführungsformen gelten gleichermaßen für den Drucksensor wie auch für das Verfahren zur Herstellung des Drucksensors.

Gemäß einer weiteren Ausführungsform wird das Gehäuse evakuiert, beispielsweise indem Luft aus der Kammer und allen sich im Gehäuse befindenden Zwischen- und Hohlräumen gepumpt wird. Anschließend wird die Kammer mit einem fluiden Medium durch eine Einfüllöffnung des Gehäuses, zum Beispiel über einen Kanal, der die Einfüllöffnung mit der Kammer verbindet, befüllt. Danach wird die Kammer verschlossen, indem die Einfüllöffnung mittels Löten oder Schweißen hermetisch dicht verschlossen wird. Wie bereits weiter oben beschrieben, kann die Einfüllöffnung direkt durch ein Lot oder durch Schweißen oder Löten eines Verschlussteils auf
eine auf dem Gehäuse aufgebrachte Metallschicht verschlossen werden.
Gemäß einer weiteren Ausführungsform ist zumindest die Einfüllöffnung beim Verschließen der Kammer mit dem fluiden Medium bedeckt. Beispielsweise kann das Gehäuse dazu zumindest mit der Einfüllöffnung in dem fluiden Medium eingetaucht sein. Gemäß einer weiteren Ausführungsform ist der Drucksensor beim Verschließen der Kammer komplett im fluiden Medium eingetaucht. Zum Beispiel kann der Drucksensor zum Befüllen mit dem fluiden Medium in eine mit dem fluiden Medium, beispielsweise Silikonöl, gefüllte Schale gelegt werden, so dass der Drucksensor zumindest mit der Einfüllöffnung oder bevorzugt auch komplett im fluiden Medium eingetaucht ist und das Silikonöl zumindest teilweise oder ganz das Gehäuse des Drucksensors und insbesondere die Einfüllöffnung bedeckt. Anschließend kann die Einfüllöffnung unter Benetzung des Silikonöls, also sozusagen im Ölbad, mittels Löten oder Verschweißen verschlossen werden, ohne die Einfüllöffnung beziehungsweise die zu verschweißenden oder zu lötenden Oberflächen des Gehäuses vorher reinigen, das heißt vom Öl befreien, zu müssen.
Dadurch kann vorteilhafterweise gewährleistet werden, dass beim Vorgang des Verschließens der Einfüllöffnung keine Luft in der Kammer eingeschlossen wird. Dadurch kann eine Volumenänderung der Kammer während des Verschlussvorgangs verhindert werden.
Beim Verschließen der Einfüllöffnung direkt durch ein Lot wird das Lot im Bereich der Einfüllöffnung auf die Metallschicht aufgebracht, bevor der Drucksensor mit dem fluiden Medium gefüllt wird. Anschließend kann der Drucksensor wie oben beschrieben durch ein Eintauchen des Gehäuses in das fluide Medium mit diesem befüllt werden, und das Lot kann unter Benetzung mit dem fluiden Medium, beispielsweise mittels eines Lasers, erhitzt werden, so dass das Lot die Einfüllöffnung verschließt. Alternativ kann der Drucksensor zuerst mit dem fluiden Medium befüllt und das Lot während des Vorgangs des Erhitzens im Bereich der gegebenenfalls mit fluidem Medium benetzten Einfüllöffnung auf das Gehäuse aufgebracht werden.
Durch die Benetzung der zu verschließenden Einfüllöffnung mit dem vorzugsweise inerten Füllmedium kann vorteilhafterweise eine Oxidation der zum Löten notwendigen Metalloberflächen, beispielsweise der Metallschicht, verhindert werden.
Weitere Vorteile und vorteilhafte Ausführungsformen des Drucksensors ergeben sich aus den im Folgenden in Verbindung mit den Figuren 1 bis 4 beschriebenen Ausführungsformen.

Es zeigen:
- Figur 1: eine schematische Schnittansicht eines mediengefüllten Drucksensors,

- Figur 2: eine schematische Ansicht eines Verfahrens zur Herstellung eines Drucksensors gemäß einem Ausführungsbeispiel,
- Figur 3: eine schematische Schnittansicht eines mediengefüllten Drucksensors gemäß einem weiteren Ausführungsbeispiel, und

- Figur 4: eine schematische Schnittansicht eines mediengefüllten Drucksensors gemäß einem weiteren Ausführungsbeispiel.

In den Ausführungsbeispielen und Figuren können gleiche oder gleich wirkende Bestandteile jeweils mit den gleichen Bezugszeichen versehen sein. Die dargstellten Elemente und deren Größenverhältnisse untereinander sind grundsätzlich nicht als maßstabsgerecht anzusehen, vielmehr können einzelne Elemente, wie zum Beispiel Schichten, Bauteile und Bereiche, zur besseren Darstellbarkeit und/oder zum besseren Verständnis übertrieben dick oder groß dimensioniert dargestellt sein.

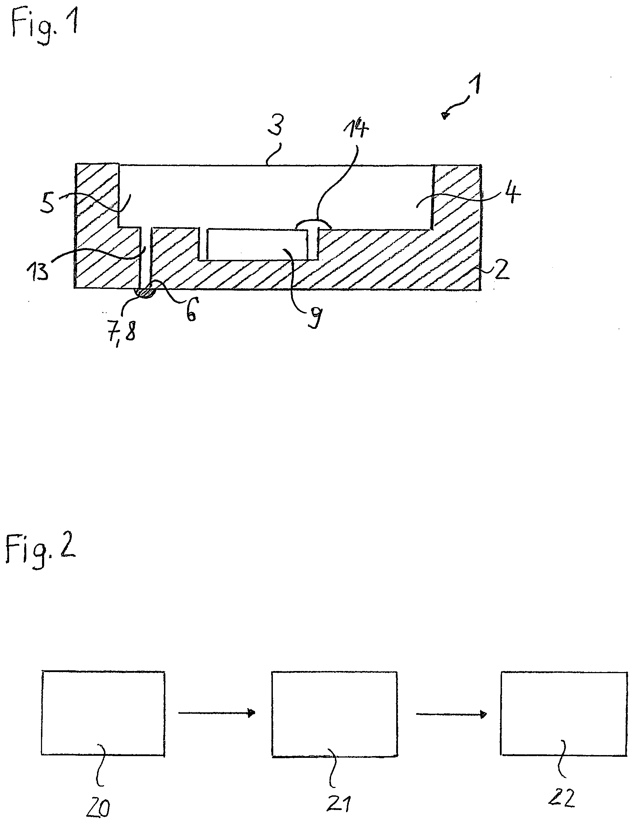

Figur 1 zeigt ein Beispiel für einen Drucksensor 1 in einer schematischen Schnittdarstellung. Der Drucksensor 1 weist ein Gehäuse 2 auf, das als Keramikgehäuse ausgeführt ist. Alternativ kann das Gehäuse 2 auch als Metallgehäuse, als Glasgehäuse, als Kunststoffgehäuse oder als FR4-Gehäuse ausgeführt sein oder eine Kombination der genannten Materialien aufweisen.
Der Drucksensor 1 weist weiterhin eine Membran 3 auf, die mit dem Gehäuse 2 verbunden ist und mit diesem eine nach außen abgeschlossene Kammer 4 bildet. Die Kammer 4 ist mit einem fluiden Medium 5 gefüllt. Bei dem fluiden Medium 5 handelt es sich um ein Silikonöl. Alternativ kann das fluide Medium 5 auch ein Mandelöl sein oder eine andere elektrisch nichtleitende und für Druckmessungen geeignete Flüssigkeit.
Das Gehäuse 2 weist eine Vertiefung auf, in der ein Sensorelement 9 angeordnet ist. Das Sensorelement 9 weist eine piezoresistive Silizium-Membran mit integrierten elektrischen Widerständen auf. Bei Einwirkung einer Kraft auf die Silizium-Membran verformt sich diese, wodurch sich die beispielsweise zu einer Wheatstone-Brücke zusammen geschalteten Widerstände ändern, wodurch eine Druckbestimmung ermöglicht wird. Die Silizium-Membran des Sensorelements 9 ist beispielsweise durch Materialabtrag aus einem SiliziumSubstrat, beispielsweise mittels Ätzens, hergestellt.

Das Sensorelement 9 ist mittels Bonddrähten 14 mit Leiterbahnen (nicht gezeigt), die auf dem Gehäuse 2 angeordnet sind, elektrisch leitend verbunden. Dadurch kann eine externe elektrische Kontaktierung des Drucksensors 1 ermöglicht werden.

Weiterhin weist der Drucksensor 1 eine Einfüllöffnung 6 auf, die über einen Kanal 13 mit der Kammer 4 verbunden ist. Die Einfüllöffnung 6 ist im gezeigten Ausführungsbeispiel auf der der Membran 3 gegenüber liegenden Seite des Gehäuses 2 angeordnet. Der Drucksensor 1 weist insbesondere in einem Bereich der Einfüllöffnung 6 ein Keramikmaterial auf. Die Einfüllöffnung 6 ist mittels eines Lötverschlusses 7 verschlossen. Alternativ kann die Einfüllöffnung 6 auch mittels eines Schweißverschlusses 8 verschlossen sein.

Durch den Verschluss der Einfüllöffnung 6 in Form eines Löt- oder Schweißverschlusses 7, 8 lässt sich das Keramik aufweisende Gehäuse 2, das aufgrund seiner
Werkstoffeigenschaften für Presspassungen, beispielsweise in Form von Einpressen von Metallkugeln oder Metallstiften in Passungen, ungeeignet ist, hermetisch dicht verschließen.

Weiterhin erfordert der Verschluss der Einfüllöffnung 6 in Form eines Löt- oder Schweißverschlusses 7, 8 vorteilhafterweise keine aufwändige Bearbeitung des Gehäuses 2 und führt so, insbesondere im Vergleich zu Gehäusen mit Passungen, zu einer Kostenreduktion.
In Figur 2 ist ein Ablaufdiagramm eines Verfahrens zur Herstellung eines Drucksensors gemäß einer Ausführungsform gezeigt. Beispielsweise kann mittels des gezeigten Verfahrens der Drucksensor gemäß dem Ausführungsbeispiel der Figur 1 herstellbar sein. Die folgenden Verweise auf Merkmale des Drucksensors beziehen sich daher rein beispielhaft auf die Elemente der Figur 1 unter Verwendung der dort gezeigten Bezugszeichen.
In einem ersten Verfahrensschritt 20 wird ein Gehäuse 2 bereitgestellt, das mit einer Membran 3 eine Kammer 4 bildet. Vorzugsweise wird in dem Gehäuse 2 ein Vakuum erzeugt, beispielsweise indem Luft, die sich in der Kammer 4 und/oder dem Kanal 13 des Gehäuses 2 befindet, aus dem Gehäuse 2 gepumpt wird.
Anschließend wird in einem weiteren Verfahrensschritt 21 die Kammer 4 durch die Einfüllöffnung 6 gasfrei mit dem fluiden Medium 5, beispielsweise mit Silikonöl, gefüllt. Dazu wird das Gehäuse mit dem fluiden Medium geflutet, beispielsweise indem das Gehäuse 2 in das Silikonöl eingetaucht wird. Dadurch wird das gesamte Innenvolumen des Drucksensors 1 mit dem fluiden Medium 5 befüllt, so dass im späteren Betrieb des Drucksensors ein auf die Membran 3 ausgeübter Druck möglichst unverfälscht von der Membran 3 über das fluide Medium 5, das die Transferflüssigkeit darstellt, auf das Sensorelement 9 übertragen werden kann.

In einem sich anschließenden weiteren Verfahrensschritt 22 wird die Einfüllöffnung 6 mittels eines Löt- oder mittels eines Schweißverfahrens verschlossen. Beim Verschlussvorgang ist vorzugsweise zumindest die Einfüllöffnung 6 mit dem fluiden Medium 5, also beispielsweise dem Silikonöl, bedeckt, um einen Verschluss ohne Gaseinschluss zu ermöglichen. Der Verschluss erfolgt also bevorzugt durch ein Löt- oder Schweißverfahren unter einer so genannten Ölverschmutzung im Ölbad. Eine Reinigung der zu verschließenden Einfüllöffnung 6 vor dem Verschluss ist beim hier beschriebenen Verfahren jedoch mit Vorteil nicht notwendig. Der Verschluss ist auch nach dem Verschließen im Ölbad hermetisch dicht.

Bei der Anwendung des Lötverfahrens ist ein Verschluss durch Fügen eines Verschlussteils oder direkt durch ein Lot möglich. Dabei ermöglicht eine angepasste Auslegung der Geometrien durch die Oberflächenspannung des Lots den Verschluss des Gehäuses.

Beim Verschluss durch ein Lötverfahren erfolgt das Löten auf einer lötfähigen Metallschicht. Bei der Metallschicht kann es sich insbesondere um eine Metallisierung handeln, wie zum Beispiel eine eingebrannte Dickschichtpaste, die gegebenenfalls noch vorbelotet ist. Dabei ist der Einsatz verschiedener Lotverfahren ohne oder mit zusätzlichem Lot möglich. Insbesondere kann das Lot schon vor dem Befüllen des Gehäuses mit dem fluiden Medium 5 im Bereich der Einfüllöffnung aufgebracht werden und nach dem Befüllen des Gehäuses erhitzt werden. Alternativ kann Lot nach dem Befüllen des Gehäuses beim Vorgang des Erhitzens auf dem Gehäuse im Bereich der Einfüllöffnung aufgebracht werden.

Die Oberflächenspannung des flüssigen Lots ist vorzugsweise größer als die Oberflächenspannung des fluiden Mediums 5, so dass das überschüssige fluide Medium 5 durch das Lot von der Einfüllöffnung weggeschoben wird und das erstarrende Lot das Gehäuse verschließt. Beispielsweise beträgt die Oberflächenspannung des Lots bei Verwendung von metallischem Lot und einem organischen fluiden Medium als Füllmedium ein Mehrfaches der Oberflächenspannung des fluiden Mediums. So liegt zum Beispiel bei der Verwendung von bleifreiem Zinnlot und Silikonöl als fluidem Medium die Oberflächenspannung des Lotes beim in etwa 25-fachen des Öls.

Beim Verschluss der Einfüllöffnung alternativ durch ein Schweißverfahren ist die Metallschicht vorzugsweise an das Fügeverfahren angepasst. Ein Einschmelzen erfolgt beispielsweise durch Aufschmelzen eines Ringbuckels des Verschlussteils im Widerstandsschweißverfahren.

Durch die kurze Einwirkzeit der Erwärmung beim Schweißen und Löten kann eine Ausdehnung des Füllmediums vernachlässigt werden.

Das hier beschriebene Verfahren zur Herstellung eines Drucksensors zeichnet sich insbesondere dadurch aus, dass Volumenänderungen des mediengefüllten Systems des Drucksensors minimiert werden und damit der Befüllvorgang vereinfacht wird.

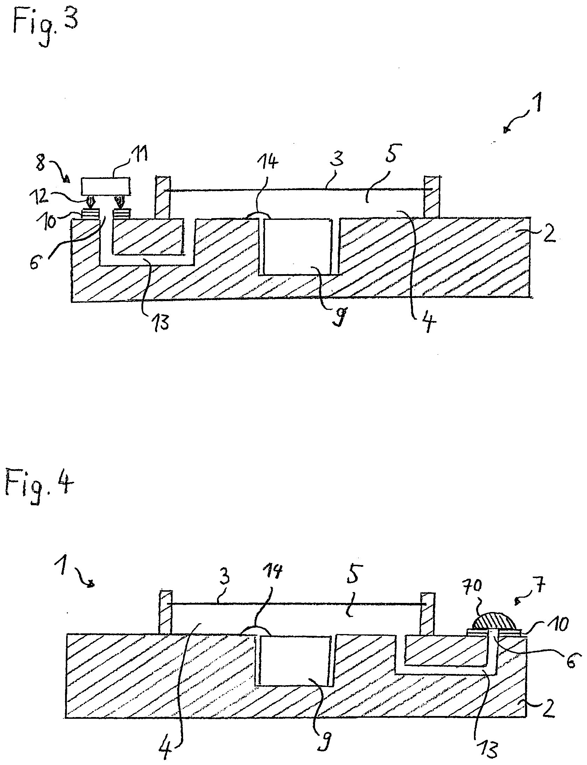

Figur 3 zeigt einen Drucksensor 1 in einer Schnittansicht gemäß einem weiteren Ausführungsbeispiel, bei dem die Einfüllöffnung 6 mittels eines Schweißverschlusses 8 verschlossen ist. Der Drucksensor 1 aus Figur 3 weist die im Zusammenhang mit der Figur 1 beschriebenen Elemente Gehäuse 2, Membran 3 und mediengefüllte Kammer 4 auf. Im Gegensatz zum Drucksensor aus Figur 1 ist die Einfüllöffnung 6 rein beispielhaft auf der gleichen Seite des Gehäuses 2 angeordnet, auf der die Membran 3 mit dem Gehäuse 2 befestigt ist. Weiterhin ist der Kanal 13, der die Einfüllöffnung 6 mit der Kammer 4 verbindet, U-förmig ausgebildet.

Auf dem Gehäuse 2 ist eine Metallschicht 10 angeordnet. Die Metallschicht 10 ist zum Beispiel mittels eines Siebdruckverfahrens auf das Gehäuse 2 aufgebracht und beispielsweise bei einer Temperatur zwischen 800 bis 900°C eingebrannt. Die Metallschicht ist auf dem Gehäuse insbesondere in einem Bereich um die Einfüllöffnung 6 herum aufgebracht, verschließt diese jedoch nicht. Ein Verschlussteil 11, das beispielsweise als Metallplatte ausgeführt ist, ist mit der Metallschicht 10 verschweißt.

Das Verschlussteil 11 weist vor dem Verschweißen mit der Metallschicht 10 eine Erhöhung 12 auf, mit der es auf der Metallschicht 10 angeordnet wird, bevor das Verschlussteil mittels Schweißen mit der Metallschicht 10 verbunden wird. Der Übersichtlichkeit halber ist die Erhöhung 12 in Figur 3 in einem Zustand vor dem Schweißen gezeigt. Beispielsweise ist die Erhöhung 12 als ringförmiger Schweißbuckel ausgebildet, der beim Schweißvorgang zumindest teilweise aufgeschmolzen wird und mit der Metallschicht 10 eine stabile Verbindung eingeht.

In Figur 4 ist eine Schnittansicht eines Drucksensors 1 gemäß einem weiteren Ausführungsbeispiel dargestellt. Der Drucksensor 1 entspricht in seinem prinzipiellen Aufbau dem Drucksensor aus Figur 3. Im Gegensatz zu dem in Figur 3 dargestellten Ausführungsbeispiel ist die Einfüllöffnung 6 beim Ausführungsbeispiel in Figur 4 mittels eines Lötverschlusses 7 verschlossen. Dabei verschließt ein Lot 70, das auf die Metallschicht 10 aufgebracht wird, direkt die Einfüllöffnung 6 des Drucksensors 1. Die Oberflächenspannung des Lots 70 ist vorzugsweise wie oben beschrieben größer als die Oberflächenspannung des fluiden Mediums 5, beispielsweise mindestens 10 mal größer, so dass wie vorab beschrieben überschüssiges fluides Medium 5 abgeschoben wird und das erstarrende Lot 70 das Gehäuse verschließen kann.

Die Erfindung ist nicht durch die Beschreibung anhand der Ausführungsbeispiele auf diese beschränkt, sondern umfasst jedes neue Merkmal sowie jede Kombination von Merkmalen. Dies beinhaltet insbesondere jede Kombination von Merkmalen in den Patentansprüchen, auch wenn dieses Merkmal oder diese Kombination selbst nicht explizit in den Patentansprüchen oder Ausführungsbeispielen angegeben ist.

### Bezugszeichenliste

- 1: Drucksensor
- 2: Gehäuse
- 3: Membran
- 4: Kammer
- 5: fluides Medium
- 6: Einfüllöffnung
- 7: Lötverschluss
- 70: Lot
- 8: Schweißverschluss
- 9: Sensorelement
- 10: Metallschicht
- 11: Verschlussteil
- 12: Erhöhung
- 13: Kanal
- 14: Bonddraht
- 20, 21, 22: Verfahrensschritte

## Patentansprüche

1. Drucksensor (1), aufweisend
- ein Gehäuse (2),
- eine Membran (3), die mit dem Gehäuse (2) eine nach außen abgeschlossene Kammer (4) bildet, die mit einem fluiden Medium (5) gefüllt ist, und
- eine Einfüllöffnung (6) im Gehäuse (2) zur Befüllung der Kammer (4) mit dem fluiden Medium (5),
- wobei die Einfüllöffnung (6) mittels eines Löt- oder Schweißverschlusses (7, 8) verschlossen ist, **dadurch gekennzeichnet, dass** die Einfüllöffnung (6) direkt durch ein Lot (70), das auf eine um die Einfüllöffnung (6) herum aufgebrachte Metallschicht (10) aufgebracht ist, oder durch ein Verschlussteil (11) verschlossen ist, wobei das Verschlussteil (11) in Form einer Metallplatte ausgeführt ist und wobei das Gehäuse (2) im Bereich um die Einfüllöffnung (6) herum eine Metallschicht (10) aufweist und wobei die Metallplatte mit der Metallschicht (10) verlötet oder verschweißt ist.

2. Drucksensor nach Anspruch 1, wobei in der Kammer (4) ein Sensorelement (9) angeordnet ist.

3. Drucksensor nach einem der vorhergehenden Ansprüche, wobei das Gehäuse (2) eines oder mehrere der folgenden Materialien aufweist: Keramik, Glas, Kunststoff, Metall.

4. Drucksensor nach einem der vorhergehenden Ansprüche, wobei die Einfüllöffnung direkt durch das Lot (70) verschlossen ist, wobei das Lot (70) und das fluide Medium (5) jeweils eine Oberflächenspannung aufweisen und die Oberflächenspannung des Lots (70) größer als die Oberflächenspannung des fluiden Mediums (5) ist.

5. Verfahren zur Herstellung eines Drucksensors (1) nach einem der vorhergehenden Ansprüche, umfassend die Schritte:
A) Bereitstellen des Gehäuses (2), das mit der Membran (3) die Kammer (4) bildet,
B) Befüllen der Kammer (4) mit dem fluiden Medium (5) durch die Einfüllöffnung (6) des Gehäuses (2),
C) Verschließen der Einfüllöffnung (6) mittels Löten oder Schweißen, wobei die Einfüllöffnung (6) direkt durch das Lot (70), das auf die um die Einfüllöffnung (6) herum aufgebrachte Metallschicht (10) aufgebracht ist, oder durch das Verschlussteil (11) verschlossen wird, wobei das Verschlussteil (11) in Form der Metallplatte ausgeführt ist und wobei das Gehäuse (2) im Bereich um die Einfüllöffnung (6) herum eine Metallschicht (10) aufweist und wobei die Metallplatte mit der Metallschicht (10) verlötet oder verschweißt wird.

6. Verfahren nach Anspruch 5, wobei die Einfüllöffnung (6) beim Verschließen der Kammer (4) mit dem fluiden Medium (5) bedeckt ist.

7. Verfahren nach einem der Ansprüche 5 oder 6, wobei der Drucksensor (1) beim Verschließen der Kammer (4) komplett im fluiden Medium (5) eingetaucht ist.

8. Verfahren nach einem der Ansprüche 5 bis 7, wobei das Verschließen der Einfüllöffnung (6) mittels Widerstandsschweißen erfolgt.

9. Verfahren nach Anspruch 8, bei dem das Gehäuse (2) im Bereich um die Einfüllöffnung (6) herum eine Metallschicht (10) aufweist, wobei zum Verschließen der Einfüllöffnung (6) das Verschlussteil (11) verwendet wird, wobei das Verschlussteil (11) eine oder mehrere Erhöhungen (12) aufweist, mit der einen oder den mehreren Erhöhungen (12) auf der Metallschicht (10) angeordnet und mit der Metallschicht (10) verbunden wird.

10. Verfahren nach einem der Ansprüche 5 bis 9, wobei die Einfüllöffnung mittels Löten verschlossen wird, wobei das Lot (70) und das fluide Medium (5) jeweils eine Oberflächenspannung aufweisen und die Oberflächenspannung des Lots (70) größer als die Oberflächenspannung des fluiden Mediums (5) ist.

## Claims

1. Pressure sensor (1), having
- a housing (2),
- a diaphragm (3) which, with the housing (2), forms a chamber (4) which is closed off to the outside, which chamber is filled with a fluid medium (5), and
- a filling opening (6) in the housing (2) for the filling of the chamber (4) with the fluid medium (5),
- wherein the filling opening (6) is closed off by means of a soldering or welding process (7, 8), **characterized in that** the filling opening (6) is closed off directly by means of a solder (70) which is applied to a metal layer (10) applied around the filling opening (6), or by means of a closure part (11), wherein the closure part (11) is designed in the form of a metal plate, and wherein the housing (2) has a metal layer (10) in the region around the filling opening (6), and wherein the metal plate is soldered or welded to the metal layer (10).

2. Pressure sensor according to Claim 1, wherein a sensor element (9) is arranged in the chamber (4).

3. Pressure sensor according to one of the preceding claims, wherein the housing (2) has one or more of the following materials: ceramic, glass, plastic, metal.

4. Pressure sensor according to one of the preceding claims, wherein the filling opening is closed off directly by means of the solder (70), wherein the solder (70) and the fluid medium (5) each have a surface tension, and the surface tension of the solder (70) is greater than the surface tension of the fluid medium (5).

5. Method for producing a pressure sensor (1) according to one of the preceding claims, comprising the steps:
A) providing the housing (2) which, with the diaphragm (3), forms the chamber (4),
B) filling the chamber (4) with the fluid medium (5) through the filling opening (6) of the housing (2),
C) closing off the filling opening (6) by means of soldering or welding, wherein the filling opening (6) is closed off directly by means of the solder (70), which is applied to the metal layer (10) applied around the filling opening (6), or by means of the closure part (11), wherein the closure part (11) is designed in the form of the metal plate, and wherein the housing (2) has a metal layer (10) in the region around the filling opening (6), and wherein the metal plate is soldered or welded to the metal layer (10).

6. Method according to Claim 5, wherein the filling opening (6) is covered with the fluid medium (5) during the closing-off of the chamber (4).

7. Method according to either of Claims 5 and 6, wherein the pressure sensor (1) is completely immersed in the fluid medium (5) during the closing-off of the chamber (4).

8. Method according to one of Claims 5 to 7, wherein the closing-off of the filling opening (6) is performed by means of resistance welding.

9. Method according to Claim 8, in which the housing (2) has a metal layer (10) in the region around the filling opening (6), wherein the closure part (11) is used for closing off the filling opening (6), wherein the closure part (11) has one or more elevations (12), is arranged with the one or more elevations (12) on the metal layer (10), and is connected to the metal layer (10).

10. Method according to one of Claims 5 to 9, wherein the filling opening is closed off by means of soldering, wherein the solder (70) and the fluid medium (5) each have a surface tension, and the surface tension of the solder 70) is greater than the surface tension of the fluid medium (5).

## Revendications

1. Capteur de pression (1), comprenant
- un boîtier (2),
- une membrane (3) qui, avec le boîtier (2), forme une chambre (4) fermée vers l'extérieur, laquelle est remplie d'un milieu fluide (5), et
- une ouverture de remplissage (6) dans le boîtier (2) destinée au remplissage de la chambre (4) avec le milieu fluide (5),
- l'ouverture de remplissage (6) étant fermée au moyen d'une fermeture brasée ou soudée (7, 8), **caractérisé en ce que** l'ouverture de remplissage (6) est fermée directement par une brasure (70), qui est appliquée sur une couche métallique (10) appliquée autour de l'ouverture de remplissage (6), ou par une pièce de fermeture (11), la pièce de fermeture (11) étant réalisée sous la forme d'une plaquette métallique et le boîtier (2) possédant une couche métallique (10) dans la zone autour de l'ouverture de remplissage (6) et la plaquette métallique étant brasée ou soudée avec la couche métallique (10).

2. Capteur de pression selon la revendication 1, un élément de détection (9) étant disposé dans la chambre (4).

3. Capteur de pression selon l'une des revendications précédentes, le boîtier (2) possédant un ou plusieurs des matériaux suivants : céramique, verre, matière plastique, métal.

4. Capteur de pression selon l'une des revendications précédentes, l'ouverture de remplissage étant fermée directement par la brasure (70), la brasure (70) et le milieu fluide (5) possédant respectivement une tension superficielle et la tension superficielle de la brasure (70) étant supérieure à la tension superficielle du milieu fluide (5).

5. Procédé de fabrication d'un capteur de pression (1) selon l'une des revendications précédentes, comprenant les étapes suivantes :
A) fourniture du boîtier (2) qui, avec la membrane (3), forme la chambre (4),
B) remplissage de la chambre (4) avec le milieu fluide (5) à travers l'ouverture de remplissage (6) du boîtier (2),
C) fermeture de l'ouverture de remplissage (6) par brasage ou soudage, l'ouverture de remplissage (6) étant fermée directement par la brasure (70), qui est appliquée sur la couche métallique (10) appliquée autour de l'ouverture de remplissage (6), ou par la pièce de fermeture (11), la pièce de fermeture (11) étant réalisée sous la forme de la plaquette métallique et le boîtier (2) possédant une couche métallique (10) dans la zone autour de l'ouverture de remplissage (6) et la plaquette métallique étant brasée ou soudée avec la couche métallique (10).

6. Procédé selon la revendication 5, l'ouverture de remplissage (6) étant recouverte du milieu fluide (5) lors de la fermeture de la chambre (4).

7. Procédé selon l'une des revendications 5 ou 6, le capteur de pression (1) étant entièrement immergé dans le milieu fluide (5) lors de la fermeture de la chambre (4).

8. Procédé selon l'une des revendications 5 à 7, la fermeture de l'ouverture de remplissage (6) étant effectuée par soudage par résistance.

9. Procédé selon la revendication 8, selon lequel le boîtier (2) possède une couche métallique (10) dans la zone autour de l'ouverture de remplissage (6), la pièce de fermeture (11) étant utilisée pour la fermeture de l'ouverture de remplissage (6), la pièce de fermeture (11) possédant un ou plusieurs bossages (12), étant disposée sur la couche métallique (10) avec l'un ou plusieurs bossages (12) et étant reliée à la couche métallique (10).

10. Procédé selon l'une des revendications 5 à 9, l'ouverture de remplissage étant fermée par brasage, la brasure (70) et le milieu fluide (5) possédant respectivement une tension superficielle et la tension superficielle de la brasure (70) étant supérieure à la tension superficielle du milieu fluide (5).
